# EUROPÄISCHE PATENTSCHRIFT

(11) **EP 1 578 507 B1**
(45) Veröffentlichungstag und Bekanntmachung des Hinweises auf die Patenterteilung: **09.04.2008**
(21) Anmeldenummer: 03779555.6
(22) Anmeldetag: 23.12.2003
(51) Int. Cl.: A63C 17/24, B60C 7/14

(54) **RAD**
WHEEL
ROUE

(30) Priorität: 02.01.2003 AT 42003
(43) Veröffentlichungstag der Anmeldung: 28.09.2005
(73) Patentinhaber: Herzog, Mario, 5111 Bürmoos (AT)
(72) Erfinder: Herzog, Mario, 5111 Bürmoos (AT)
(74) Vertreter: Babeluk, Michael
(86) Internationale Anmeldenummer: PCT/AT2003/000386
(87) Internationale Veröffentlichungsnummer: WO 2004/060506

(56) Entgegenhaltungen:
- EP-A- 0 898 992
- DE-A- 1 505 029
- FR-A- 787 097
- FR-A- 800 880
- GB-A- 191 125 342
- US-A- 2 951 523
- US-A- 3 208 500

## Beschreibung

Die Erfindung betrifft ein Rad für ein Sportgerät, insbesondere für den Grasschilauf, gemäß dem Oberbegriff von Patentanspruch 1.

Es besteht zunehmender Bedarf an neuartigen Sportgeräten, die eine Erweiterung des Spektrums von Freizeitaktivitäten ermöglichen. Eine Form von Sportgeräten sind solche, die eine dem Schifahren ähnliche Abfahrt auf schneefreien Hängen ermöglichen, also zum sogenannten Grasschilauf dienen. Solche Sportgeräte sind im Allgemeinen ähnlich wie Schier aufgebaut, d.h. sie sind länglich mit einer Bindung zur Befestigung an einem Schuh, besitzen jedoch mindestens zwei Rollen an Stelle der Laufflächen von Schiern.

Der eigentliche Grasschilauf wird auf Wiesen durchgeführt und setzt somit einen ausreichend glatten Untergrund voraus, der weitgehend frei von Hindernissen ist. In Sinn der vorliegenden Erfindung soll jedoch der Begriff Grasschilauf auch auf Aktivitäten in rauerem Gelände ausgedehnt werden, d.h. beispielsweise auf Abfahrten auf geschotterten Forststraßen und anderem Untergrund. Das Sportgerät und insbesondere das Rad eines solchen Sportgeräts im Sinn der Erfindung soll daher ein weitgehend geländetaugliches Verhalten aufweisen, so dass man nicht an die Verwendung auf Wiesen gebunden ist.

Eine weitere Anforderung, die an ein Sportgerät gestellt wird, ist, dass die Beherrschung möglichst leicht erlernbar ist und dass das Fahrverhalten angenehm ist und der Bewegungsablauf möglichst physiologisch ist, um Schädigungen des Bewegungsapparates zu vermeiden. Ein im Allgemeinen als sehr angenehm empfundener Bewegungsablauf, der die obigen Forderungen erfüllt, ist der sich beim Tiefschneefahren mit Schiern einstellende. Es ist daher wünschenswert, ein Sportgerät zu schaffen, das in seinem Fahrverhalten so weit wie möglich an einen Schi herankommt, der im Tiefschnee gefahren wird. Es soll insbesondere das Verhalten beim Drehen und beim Lastwechsel die Tiefschneefahrt simulieren.

Eine wesentliche Voraussetzung für das Erreichen des oben beschriebenen Fahrverhaltens ist eine entsprechende Ausbildung der Räder des Sportgeräts. Diese müssen einerseits eine bestimmte Geländegängigkeit ermöglichen und andererseits durch ihre Elastizität ein entsprechendes Lenkverhalten gewährleisten, um Richtungswechsel wie beim Schifahren zu ermöglichen.

Aus der WO 00/27490 ist ein Rad bekannt, das für Inline-Skater verwendbar ist. Dieses Rad besitzt eine Außenfelge, die gegenüber einer Innenfelge federnd gelagert ist, um Stöße abzufedern. Weiters ist aus der WO 98/41295 ein Rad bekannt, das ebenfalls für Inline-Skater vorgesehen ist. Um ein vorbestimmtes Bremsverhalten beim Querstellen des Skaters zu erreichen, ist ein torusförmiger Reifen vorgesehen, der sich um seine eigene Achse drehen kann und so eine entsprechend gebremste Seitwärtsbewegung des Rades ermöglicht. Beide oben beschriebenen vorbekannten Räder sind nicht in der Lage, das Fahrverhalten eines Schis beim Tiefschneefahren zu simulieren. Insbesondere kann mit den bekannten Vorrichtungen ein Betrieb in rauerem Gelände nicht durchgeführt werden.

Auch mit Rädern, die herkömmlicher Weise mit Luftreifen ausgestattet sind, wie sie etwa in der US 5,535,800 A offenbart sind, kann das Fahrverhalten nicht entsprechend dem gewünschten Tiefschneefahrverhalten angepasst werden.

Die US 2,951,523 A zeigt einen Fahrzeugreifen, der als drucklose Reifen ausgebildet ist und in seinem Inneren Stützelemente aufweist, die dazu dienen die Belastbarkeit zu erhöhen. Besondere Eigenschaften hinsichtlich des Abrollverhaltens oder der seitlichen Flexibilität sind hier nicht angesprochen.

Aufgabe der Erfindung ist es, diese Nachteile zu vermeiden und ein Rad zu schaffen, mit welchem ein Fahrverhalten erreichbar wird, das weitgehend dem Schifahren in Tiefschnee entspricht. Insbesondere soll dabei ein Bewegungsablauf gefördert werden, der ergonomisch sinnvoll ist und der nicht nur keine gesundheitlichen Schäden verursacht, sondern auch therapeutisch wirksam ist.

Erfindungsgemäß werden diese Aufgaben durch die Merkmale von Patentanspruch 1 gelöst.

Wesentlich an der Erfindung ist die Kombination von Stützelementen, die einen ersten, größeren Teil des Federverhaltens des Rades bereitstellen, mit einer in Dickenrichtung elastischen Schicht, die einen weiteren Teil der Federwirkung ergibt. In überraschender Weise hat sich herausgestellt, dass diese Kombination von Bauelementen nicht nur eine entsprechende Geländegängigkeit ergibt, sondern auch ein Fahrverhalten zur Folge hat, das dem Fahren im Tiefschnee weitgehend ähnlich ist. Dies bedeutet, dass bis zu einer bestimmten Querkraft, die auf das Rad quer zur Fahrtrichtung wirkt, ein stabiler Geradeauslauf gewährleistet ist. Wird jedoch diese Querkraft überschritten, so erfolgt eine erntsprechende Verformung des Reifens im Bereich der Aufstandsfläche, so dass das Rad eine Bewegungskomponente quer zur eigentlichen Laufrichtung erhält. Da die Querkraftgrenze, ab der die Querbewegung beginnt, von der Belastung des Rades abhängt und die Größe der Bewegungskomponente quer zur Laufrichtung mit zunehmenden Neigung des Rades gegenüber einer senkrechten Ebene abnimmt, wird eine weitgehende Übereinstimmung mit dem Tiefschneefahren erreicht.

Gemäß einer vorteilhaften Ausführungsvariante der Erfindung ist vorgesehen, dass der erste und der zweite Lagerabschnitt an einander gegenüberliegenden Seiten des äußeren Umfangs der Felge angeordnet sind. Dadurch wird ein besonders robuster Aufbau des Rades erreicht.

Ein besonders vorteilhaftes Fahrverhalten kann dadurch erreicht werden, dass eine Vielzahl von Stützelementen vorgesehen ist, die in Umfangsrichtung im Abstand nebeneinander angeordnet sind. Das Einfedern des Reifens an einer Stelle, d.h. im Allgemeinen an der Aufstandsfläche kann dadurch weitgehend von der Verformung an anderen Stellen entkoppelt werden. Dies steht im Gegensatz zu Luftreifen, bei denen die Federwirkung durch den inneren Überdruck bewirkt wird. Durch den Druck und die Zugspannung im Schlauch oder im Mantel hängen die Verformungen zumindest von benachbarten Bereichen zusammen, so dass sich ein bestimmtes Fahrverhalten ergibt, das beispielsweise für Motorräder durchaus günstig und vorteilhaft ist. Schier können damit jedoch nur unzureichend simuliert werden.

Besonders günstig ist es, wenn die Stützelemente als Metall-Blattfedern ausgebildet sind. Die Federcharakteristik kann dabei in einer Richtung quer zum Umfang des Rades nach verschiedenen Gesichtspunkten optimiert werden. Es ist alternativ auch möglich, dass die Stützelemente als mäanderförmige Federdrähte ausgebildet sind. Dadurch können besonders weiche Federn realisiert werden.

In einer weiteren bevorzugten Ausführungsvariante der Erfindung können zusätzliche Federelemente zur Abstützung der Stützelemente vorgesehen sein. Dadurch werden weitere Freiheitsgrade bei der Feinabstimmung des Rades erreicht.

Besondere Vorteile ergeben sich erfindungsgemäß dadurch, dass der Reifen dreischichtig aufgebaut ist und aus einer Lauffläche, einer weich-elastischen Innenschicht und einer Auflageschicht besteht. Die Auflageschicht ist dabei mechanisch widerstandsfähig, um der Reibung an den Federelementen zu widerstehen. Die Lauffläche weist die für das jeweilige Gelände optimale Profilierung und eine geeignete Verschleißfestigkeit auf. Die weich-elastische Innenschicht ist in Dickenrichtung elastisch und ermöglicht ein feines Federverhalten.

Eine weitere besonders begünstigte Ausführungsvariante der Erfindung sieht an der Felge neben dem Reifen ein Eingriffselement vor, das sich entlang des Umfangs der Felge erstreckt. Dadurch kann der Eingriff der Kanten simuliert werden, der beim Fahren im Tiefschnee erst ab einem bestimmten Neigungswinkel in Querrichtung wirksam wird.

Eine weitere Verbesserung des Fahrverhaltens kann dadurch erreicht werden, dass der Reifen drucklos ausgebildet ist. Besonders günstig ist es auch, wenn der Außendurchmesser der Felge etwa dem halben Durchmesser des Reifens entspricht.

Weiters betrifft die Erfindung ein Sportgerät, insbesondere für den Grasschilauf mit einem in Längsrichtung verlaufenden Rahmen, an dem mindestens zwei Räder mit elastisch verformbaren Reifen starr gelagert sind, mit einer Bindung zur Befestigung des Sportgeräts an einem Schuh einer das Sportgerät benützenden Person, wobei ein vorderes Rad vor der Bindung angeordnet ist und wobei ein hinteres Rad hinter der Bindung angeordnet ist.

Erfindungsgemäß ist ein solches Sportgerät dadurch gegenzeichnet, dass am Rahmen hinter dem hinteren Rad ein Fortsatz vorgesehen ist, der an seinem Ende einen Stützabschnitt aufweist, der durch Gewichtsverlagerung von einer Stellung oberhalb des Bodens in eine Stellung bringbar ist, in der er den Boden berührt und dass mindestens ein Rad wie oben beschrieben ausgebildet ist.

Ein solches Sportgerät ermöglicht im Zusammenhang mit dem oben beschriebenen Rad ein besonders vorteilhaftes Fahrverhalten. Durch den Fortsatz kann lediglich durch Gewichtsverlagerung das Fahrverhalten wesentlich verändert werden. Bei neutraler Belastung steht das Sportgerät mit den Rädern am Boden auf, der Stützabschnitt berührt den Boden jedoch nicht. Durch eine entsprechende Gewichtsverlagerung wird das vordere Rad entlastet und das hintere Rad starker belastet. Da die Räder entsprechend weich ausgebildet sind, erfolgt durch das geänderte Einfedern eine Neigung des Sportgeräts nach hinten, so dass der Stützabschnitt am Boden aufliegt. Da der Stützabschnitt im Gegensatz zu den Rädern praktisch keine Seitenführungskraft aufweist, wird die Drehbarkeit in diesem Zustand wesentlich erleichtert. Dies entspricht weitgehend dem Fahrverhalten von Schiern im Tiefschnee, die durch Gewichtsverlagerung nach hinten entsprechend leichter drehbar sind.

Je nach Stärke der Gewichtsverlagerung bleibt das vordere Rad zunächst entlastet am Boden, kann jedoch durch stärkere Gewichtsverlagerung zum Abheben gebracht werden.

In einer bevorzugten Ausführungsvariante ist vorgesehen, dass der Fortsatz federnd am Rahmen befestigt ist. Dadurch kann ein entsprechend weicher Übergang im Fahrverhalten gewährleistet werden. Zusätzlich oder alternativ dazu kann jedoch auch vorgesehen sein, dass der Fortsatz elastisch ist.

Besonders vorteilhaft ist es, wenn der Stützabschnitt plattenförmig ausgebildet ist. Durch die Berührung des Stützabschnitts mit dem Boden wird neben den oben beschriebenen Wirkungen auch eine gewisse Bremsung hervorgerufen, was an sich nicht unerwünscht ist. Die Bremswirkung soll jedoch in Grenzen gehalten werden, um keine Abweichung vom gewünschten Verhalten zu verursachen. Die plattenförmige Ausbildung des Stützabschnitts ist in dieser Hinsicht optimal.

Ein besonders vorteilhafter Aufbau des Sportgeräts wird erreicht, wenn der Durchmesser der Räder zwischen 20% und 50%, vorzugsweise etwa 30% des Achsabstandes beträgt.

In einer besonders begünstigten Ausführungsvariante der Erfindung ist vorgesehen, dass die Bindung unmittelbar vor dem hinteren Rad angeordnet ist. Dadurch wird der Wechsel des Fahrverhaltens durch Gewichtsverlagerung begünstigt.

Die Erfindung wird im Folgenden anhand der in den Figuren dargestellten Ausführungsvarianten näher erläutert. Es zeigen:
- Fig. 1: ein erfindungsgemäßes Rad in einer ersten Ausführungsvariante in einer Ansicht,
- Fig. 2: einen Schnitt nach Linie II - II in Fig. 1;
- Fig. 3,: Fig. 4, Fig. 5 verschiedene Ausführungsvarianten der Lagerung eines Stützelementes im Detail in vergrößertem Maßstab;
- Fig. 6,: Fig. 7, Fig. 8 und Fig. 8a verschiedene Ausführungsvarianten von Stützelementen; und
- Fig. 9: schematisch ein erfindungsgemäßes Sportgerät in einer seitlichen Ansicht.

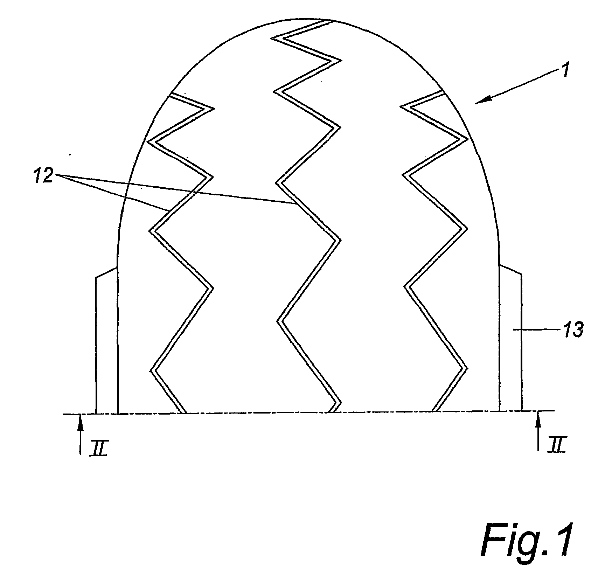

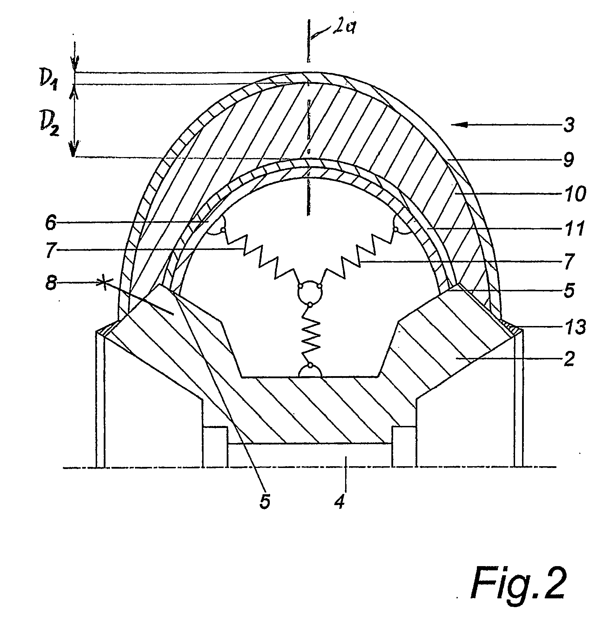

Das Rad 1, das in den Fig. 1 und Fig. 2 dargestellt ist, besteht grundsätzlich aus einer Felge 2, die beispielsweise in Aluminium- oder Magnesiumdruckguss hergestellt ist und einen darauf befestigten Reifen 3. Die Felge 2 besitzt eine Bohrung 4 zur Aufnahme der nicht dargestellten Radachse und der Radlager. Die Felge 2 besitzt an ihrem äußeren Umfang beidseits jeweils eine Lagerabschnitt 5. Zwischen diesen Lagerabschnitten 5 erstrecken sich bogenförmig mehrere Stützelemente 6 nach außen, die als Blattfedern aus Metall ausgebildet sind. Die Stützelemente 6 sind über den Umfang grundsätzlich dicht angeordnet, besitzen jedoch einen ausreichenden Abstand, um ein weitgehend unabhängiges Einfedern zu ermöglichen. Um die Federcharakteristik je nach Richtung einer Krafteinwirkung zu verändern, können nach Bedarf zusätzliche Federelemente 7 vorgesehen sein, die die Stützelemente 6 gegenüber der Felge 2 abstützen. Auf den Stützelementen 6 liegt der Reifen 3 frei auf. Um den korrekten Sitz zu gewährleisten, sind Befestigungselemente, wie etwa Schrauben 8, vorgesehen, die den Reifen 3 am Umfang der Felge 2 befestigt.

Der Reifen 3 selbst ist dreischichtig ausgebildet und besteht aus einer äußeren Lauffläche 9, einer weichelastischen Innenschicht 10 und einer Auflageschicht 11. Die Lauffläche 9 ist abriebfest ausgebildet und hat die Aufgabe, die entsprechende Bodenhaftung zu gewährleisten. Zu diesem Zweck ist eine in Fig. 1 schematisch eingezeichnete Profilierung 12 vorgesehen. Die weichelastische Innenschicht 10 ist kompressibel ausgebildet und besteht beispielsweise aus Schaumgummi mit einer geeigneten Steifigkeit oder aus Moosgummi. Im unbelasteten Zustand ist die Dicke D₂ der weichelastischen Innenschicht 10 in der Medialebene 2a mit 30 mm etwa fünfzehnmal so groß wie die Dicke D₁ der Lauffläche 9. Die weichelastische Innenschicht 10 ist so nachgiebig, dass sie bei Nennbelastung um etwa die Hälfte zusammengedrückt wird, d.h. die Dicke D₂ auf den halben Wert zurückgeht. Als Nennbelastung wird eine Belastung angenommen, die sich im statischen Fall ergibt, wenn das Sportgerät mit einem durchschnittlich schweren Benutzer belastet ist.

Die Auflageschicht 11 dient primär dazu, an der Verbindungsstelle zu den Stützelementen 6 die entsprechende mechanische Festigkeit zu gewährleisten. Wie aus Fig. 2 ersichtlich ist, ist die Dicke der Innenschicht 10 medial am größten und nimmt in lateraler Richtung kontinuierlich ab. Durch die entsprechende Wahl der Abmessungen kann das Fahrverhalten entsprechend beeinflusst und abgestimmt werden. Seitlich neben dem Basisbereich des Reifens 3 sind an der Felge 2 ringförmige Hartgummikanten 13 angebracht, die ab einer entsprechenden Neigung des Rades 1 in Eingriff mit dem Untergrund kommen und damit einen Kanteneinsatz eines Alpinschis simulieren können, da nunmehr eine Lateralbewegung weitgehend verhindert wird.

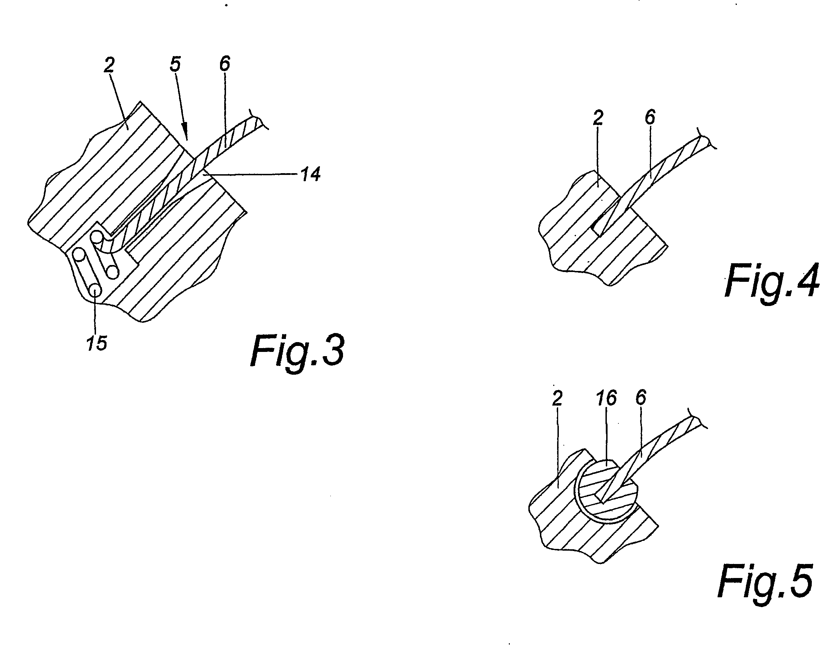

Fig. 3 zeigt eine erste Ausführungsvariante der Befestigung der Stützelemente 6 an der Felge 2 im Detail. Das Stützelement 6 von Fig. 3 ist in einem Schlitz 14, der im Lagerabschnitt 5 angeordnet ist, in Längsrichtung verschiebbar gelagert. Um eine entsprechende Auslenkung des Stützelementes 6 zu ermöglichen, ist der Schlitz 14 in seinem Endabschnitt nach außen konisch erweitert. Eine Feder 15 steuert die Bewegung des Stützelementes 6 in Richtung des Schlitzes 14.

Bei der Ausführungsvariante von Fig. 4 ist das Stützelement 6 fest in der Felge 2 eingespannt. Bei dieser Ausführungsvariante wird im Bereich der Felge 2 eine wesentlich höhere Steifigkeit erzielt.

Bei der Ausführungsvariante von Fig. 5 ist das Stützelement 6 in einem Lagerkörper 16 eingespannt, der seinerseits drehbar in der Felge 2 gelagert ist. Bei dieser Ausführungsvariante kann in der Umgebung der Felge 2 ein besonders weiches Federverhalten erzielt werden.

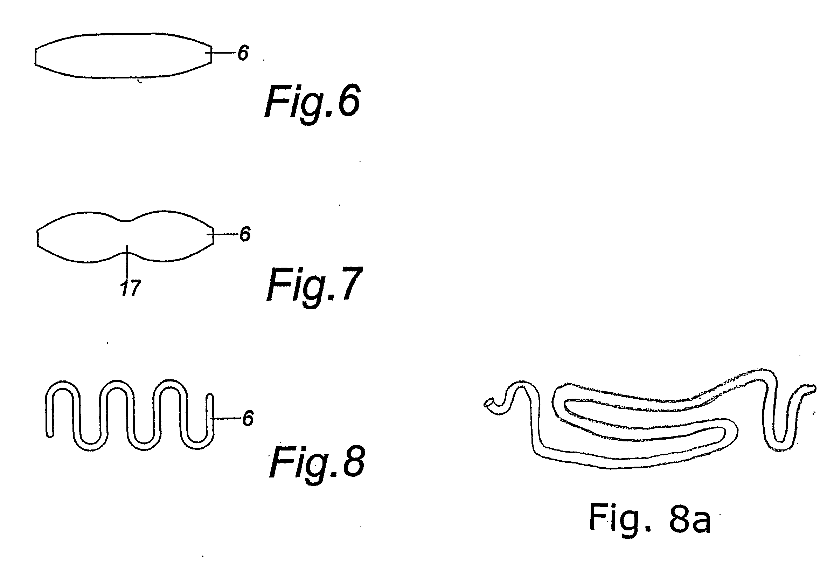

Die Fig. 6, Fig. 7 und Fig. 8 zeigen verschiedene Ausführungsvarianten des Stützelementes 6 in abgewickelter Form. Bei der Ausführungsvariante von Fig. 6 ist das Stützelement 6 im mittleren Abschnitt verdickt, so dass die einzelnen Stützelemente 6 in zusammengebautem Zustand etwa gleichmäßige Abstände aufweisen.

Das Stützelement 6 von Fig. 7 ist ähnlich aufgebaut wie das von Fig. 6 mit der Ausnahme, dass im mittleren Bereich ein verjüngter Abschnitt 17 vorgesehen ist. Auf diese Weise kann im medialen Bereich eine besonders Federkennlinie erzielt werden. Eine weitere Ausführungsvariante des Stützelementes 6 ist in Fig. 8 gegeben, in der ein Stützelement 6 dargestellt ist, das als mäanderförmiger Federdraht ausgebildet ist. Dadurch kann insgesamt ein besonders weiches Federverhalten erzielt werden. Fig. 8a zeigt eine Abwandlung der mäanderförmigen Ausführung von Fig. 8, bei der die Mäander zum Teil in Umfangsrichtung und zum Teil quer dazu angeordnet sind.

Das erfindungsgemäße Rad 1 besitzt im Allgemeinen einen Durchmesser zwischen etwa 23 cm und 28 cm und besitzt aufgrund seiner relativ großen Breite von etwa 15 cm einen gedrungenen Aufbau. Da der Reifen 3 drucklos auf gebaut ist, das heißt, auch im belasteten Zustand keinen inneren Überdruck aufweist, ist das Verformungsverhalten einzelner Abschnitte des Reifens 3 weitgehend unabhängig von dem aktuellen Verformungszustand anderer Abschnitte. Besonders hervorzuheben ist, dass sich der Verformungswiderstand abhängig von dem Ort und dem Winkel der Krafteinbringung je nach Ausbildung der Stützelemente 6 und ihrer Verankerung an der Felge 2 in weiten Grenzen einstellen lässt, so dass eine optimale Abstimmung erzielt werden kann.

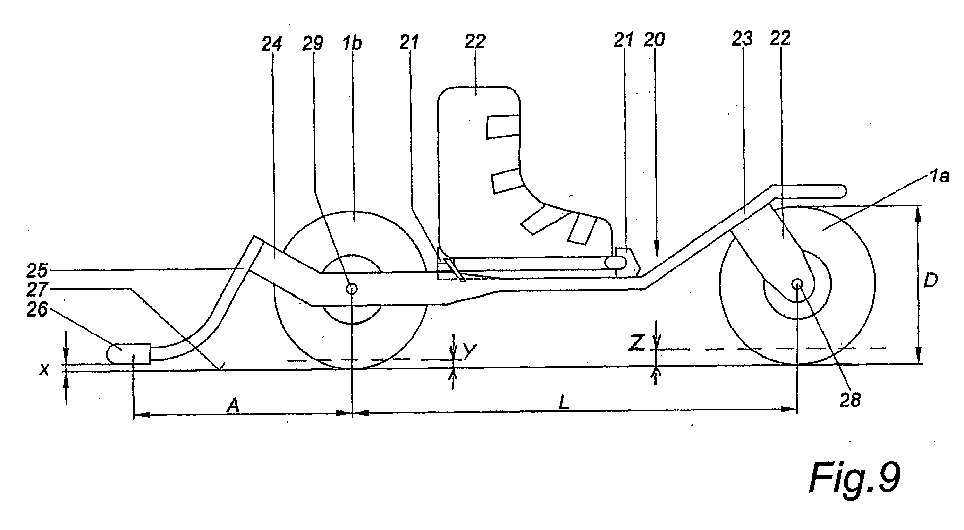

Fig. 9 zeigt ein erfindungsgemäßes Sportgerät in einer seitlichen Ansicht in unbelastetem Zustand. Das Sportgerät besteht aus einem Rahmen 20, an dem ein vorderes Rad 1a und ein hinteres Rad 1b angebracht sind. Über eine Bindung 21 ist ein schematisch angedeuteter Schuh 22 für den Benützer Sportgerätes zu befestigen. Das vordere Rad 1a ist über eine Vordergabel 22 starr an einem Vorderteil 23 des Rahmens 20 befestigt, der über das vordere Rad 1a gezogen ist. Das hintere Rad 1b ist an einer Gabel 24 des Rahmens 20 ebenfalls starr gelagert. An Stelle einer Gabel im eigentlichen Sinn kann auch eine Einarmlagerung vorgesehen sein, die das Rad 1a, 1b nur auf einer Seite mit einem fliegenden Achsstummel hält.

Am hinteren Ende der Gabel 24 ist ein Fortsatz 25 vorgesehen, der an seinem Ende einen Stützabschnitt 26 trägt. Das Sportgerät ist aus Leichtmetall hergestellt, um bei notwendiger Festigkeit und Steifigkeit ein möglichst geringes Gewicht zu erreichen.

Bei gleichmäßig belastetem Sportgerät, d.h. wenn der Schwerpunkt der das Sportgerät benützenden Person im Wesentlichen über dem Schuh 22 liegt, ist der Fortsatz 26 in einem Abstand x oberhalb der Bodenoberfläche 27 angeordnet, wobei x beispielsweise 10 mm beträgt. Die in Fig. 9 nur angedeutete Verformung der Räder 1a, 1b um einen Weg z bzw. y beträgt dann beispielsweise z = 16 für das vordere Rad 1a und z= 20 mm für das Hinterrad 1b. Durch Gewichtsverlagerung nach hinten kann jedoch eine entsprechende Verformung der Reifen 3 der Räder 1a, 1b erzielt werden, so dass sich das Sportgerät in einer Richtung entgegen der Richtung des Uhrzeigersinns neigt und der Stützabschnitt 26 des Boden 27 berührt. Die Berührung des Stützabschnitts 26 tritt ein, wenn durch die Gewichtsverlagerung das vordere Rad 1a auf z = 10 mm entlastet ist und das hintere Rad 1b auf y = 26 mm zusätzlich belastet ist. Da das vordere Rad 1a noch teilweise belastet ist kann noch eine Seitenführungskraft übernommen werden. Diese wird allerdings durch weitere Entlastung des vorderen Rades 1a weiter verringert, wobei diese Verringerung kontinuierlich erfolgt und nicht abrupt, wie es der Fall wäre, wenn das vordere Rad 1a sofort abhebt. Eine Mindestverformung von 15 mm bei Nennlast hat sich als Untergrenze für einen optimalen Betrieb des Sportgeräts herausgestellt.

Der Fortsatz 25 ist federnd ausgebildet, so dass sich bei weiterer Gewichtsverlagerung nach hinten eines stärkere Neigung einstellen kann, die letztlich auch dazu führen kann, dass das vordere Rad 1a vom Boden 27 abhebt. Aufgrund der geringeren Seitenführungskraft des Fortsatzes 26 wird dadurch die Lenkbarkeit wesentlich erhöht. Bei der Ausführungsvariante von Fig. 9 ist der Stützabschnitt 26 plattenförmig ausgebildet, für das Fahren auf Asphalt kann jedoch auch an dieser Stelle eine Rolle vorgesehen sein, um die Geräuschentwicklung und den Widerstand zu verringern.

Bei der dargestellten Ausführungsvariante liegt der Durchmesser D der Räder 1a, 1b bei etwa 40% des Achsabstandes L. Je nach Ausführungsvariante ist der Durchmesser D der Räder 1a, 1b zwischen 20% und 50% des Achsabstandes L zu wählen. Weiters ist aus Fig. 9 ersichtlich, dass die Bindung 21 so angeordnet ist, dass der Schuh 22 unmittelbar vor dem hinteren Rad 1b endet.

Der Abstand A des Stützabschnitts 26 von der Achse 29 des hinteren Rades 1b beträgt horizontal gemessen etwa 50% des Achsabstandes L, d.h. des Abstandes der Achsen 28 und 29. Ein Bereich zwischen 30% und 60% ist vorteilhaft.

Die vorliegende Erfindung ermöglicht es, ein Fahrverhalten zu erreichen, das dem von Schiern im Tiefschnee weitgehend ähnlich ist. Insbesondere sind ähnliche Trickschifiguren fahrbar.

## Patentansprüche

1. Rad (1, 1a, 1b), insbesondere für ein Sportgerät für den Grasschilauf oder dergleichen, mit einer Felge (2) und einem an der Felge (2) befestigten Reifen (3) mit einer Lauffläche (9) und mit mindestens einem federnd ausgebildeten Stützelement (6) für den Reifen (3), das sich bogenförmig von einem ersten Lagerabschnitt (5) zu einem zweiten Lagerabschnitt (5) erstreckt und das den Reifen (3) im Wesentlichen in seinem gesamten Querschnittsverlauf unterstützt, **dadurch gekennzeichnet, dass** der Reifen (3) aus mehreren Schichten besteht und an die Lauffläche zum Radinneren hin anschließend eine in Dickenrichtung elastische Schicht (10) aufweist und dass eine Vielzahl von Stützelementen (6) vorgesehen ist, die in Umfangsrichtung im Abstand nebeneinander angeordnet sind.

2. Rad (1; 1a, 1b) nach Anspruch 1, **dadurch gekennzeichnet, dass** der erste und der zweite Lagerabschnitt (5) an einander gegenüberliegenden Seiten des äußeren Umfangs der Felge (2) angeordnet sind.

3. Rad (1; 1a, 1b) nach einem der Ansprüche 1 oder 2, **dadurch gekennzeichnet, dass** in Dickenrichtung elastische Schicht (10) aus Moosgummi aufgebaut ist und in der Medialebene (2a) eine Dicke (D₂) aufweist, die mindestens fünfmal, vorzugsweise zehnmal so groß ist wie die Dicke (D₁) der Lauffläche (9).

4. Rad (1; 1a, 1b) nach Anspruch 1 bis 3, **dadurch gekennzeichnet, dass** die Stützelemente (6) als mäanderförmige Federdrähte ausgebildet sind.

5. Rad (1; 1a, 1b) nach einem der Ansprüche 1 bis 4, **dadurch gekennzeichnet, dass** zusätzliche Federelemente zur Abstützung der Stützelemente (6) vorgesehen sind.

6. Rad (1; 1a, 1b) nach einem der Ansprüche 1 bis 5, **dadurch gekennzeichnet, dass** das Stützelement (6) an der Felge (2) eingespannt, gelenkig gelagert oder federnd verschiebbar gelagert ist.

7. Rad (1; 1a, 1b) nach einem der Ansprüche 1 bis 6, **dadurch gekennzeichnet, dass** der Reifen (3) beidseits mit der Felge (2) fest verbunden ist und auf dem Stützelement (6) frei aufliegt.

8. Rad (1; 1a, 1b) nach einem der Ansprüche 1 bis 7, **dadurch gekennzeichnet, dass** der vorzugsweise drucklos ausgebildete Reifen (3) dreischichtig aufgebaut ist und aus einer Lauffläche (9), einer weich-elastischen Innenschicht (10) und einer Auflageschicht (11) besteht.

9. Rad (1; 1a, 1b) nach einem der Ansprüche 1 bis 8, **dadurch gekennzeichnet, dass** an der Felge (2) neben dem Reifen (3) ein Eingriffselement (13) vorgesehen ist, das sich entlang des Umfangs der Felge (2) erstreckt.

10. Rad (1; 1a, 1b) nach einem der Ansprüche 1 bis 9, **dadurch gekennzeichnet, dass** der Außendurchmesser der Felge (2) etwa dem halben Außendurchmesser (D) des Reifens (3) entspricht.

11. Sportgerät, insbesondere für den Grasschilauf, mit einem in Längsrichtung verlaufenden Rahmen (20), an dem mindestens zwei Räder (1; 1a, 1b) mit elastisch verformbaren Reifen (3) starr gelagert sind, mit einer Bindung (21) zur Befestigung des Sportgeräts an einem Schuh (22) einer das Sportgerät benützenden Person, wobei ein vorderes Rad (1a) vor der Bindung (21) angeordnet ist und wobei ein hinteres Rad (1b) hinter der Bindung (21) angeordnet ist, und wobei am Rahmen (20) hinter dem hinteren Rad (1b) ein zum Lenken des Sportgeräts bestimmter Fortsatz (25) vorgesehen ist, der an seinem distalen Ende einen Stützabschnitt (26) aufweist, **dadurch gekennzeichnet, dass** der vorzugsweise federnd am Rahmen befestigte oder elastische Fortsatz (25) durch Gewichtsverlagerung von einer Stellung oberhalb des Bodens (27) in eine Stellung bringbar ist, in der er aufgrund ausreichender Verformbarkeit der Räder (1; 1a, 1b) gleichzeitig mit dem vorderen und dem hinteren Rad (1a, 1b) den Boden (27) berührt, und dass mindestens ein Rad (1; 1a, 1b) nach einem der Ansprüche 1 bis 10 ausgebildet ist.

## Claims

1. A wheel (1, 1a, 1b), especially for a piece of sports equipment for grass skiing, comprising a rim (2) and a tire (3) which is fastened to the rim (2) and is provided with a tread (9), and at least one support element (6) for the tire (3), which support element is provided with a resilient configuration and extends in a curved manner from a first bearing section (5) to a second bearing section (5) and supports the tire (3) essentially along the entire distance of the cross section, **characterized in that** the tire (3) consists of several layers and is provided, adjacent to the tread towards the interior of the wheel, with a layer (10) that is elastic in the direction of thickness thereof, and that a plurality of support elements (6) are provided which are arranged in a spaced manner adjacent to each other in the circumferential direction.

2. A wheel (1; 1a, 1b) according to claim 1, **characterized in that** the first and second bearing section (5) are arranged at mutually opposite sides of the outer circumference of the rim (2).

3. A wheel (1; 1a, 1b) according to one of the claims 1 or 2, **characterized in that** the layer (10) which is elastic in the direction of thickness consists of sponge rubber and has a thickness (D₂) in the medial plane (2a) which is at least five times but preferably ten times as large as the thickness (D₁) of the tread (9).

4. A wheel (1; 1a, 1b) according to claim 1 to 3, **characterized in that** the support elements (6) are arranged as meandering spring wires.

5. A wheel (1; 1a, 1b) according to one of the claims 1 to 4, **characterized in that** additional spring elements are provided for supporting the support elements (6).

6. A wheel (1; 1a, 1b) according to one of the claims 1 to 5, **characterized in that** the support element (6) is clamped on the rim (2), articulated thereon or resiliently held thereon.

7. A wheel (1; 1a, 1b) according to one of the claims 1 to 6, **characterized in that** the wheel (3) is rigidly connected on both sides with the rim (2) and rests freely on the support element (6).

8. A wheel (1; 1a, 1b) according to one of the claims 1 to 7, **characterized in that** the wheel (3), preferably arranged to be non-pressurized, is provided with a three-layer configuration and consists of a tread (9), a soft-elastic inner layer (10) and a support layer (11).

9. A wheel (1; 1a, 1b) according to one of the claims 1 to 8, **characterized in that** an engagement element (13) is provided on the rim (2) adjacent to the wheel (3), which engagement element extends along the circumference of the rim (2).

10. A wheel (1; 1a, 1b) according to one of the claims 1 to 9, **characterized in that** the outside diameter of the rim (2) corresponds to approximately half the outside diameter (D) of the tire (3).

11. A piece of sports equipment, especially for grass skiing, comprising a frame (20) which extends in the longitudinal direction and on which at least two wheels (1; 1a, 1b) with elastically deformable tires (3) are rigidly held, a binding (21) for fastening the sports device to a shoe (22) of a person using the sports device, with a front wheel (1a) being arranged in front of the binding (21) and a rear wheel (1b) being arranged behind the binding (21), and with an extension (25) being provided on the frame (20) behind the rear wheel (1b), which extension is designated for steering the sports device and comprises at its distal end a support section (26), **characterized in that** the extension (25) which is preferably fastened in a resilient manner to the frame or is elastic can be brought by displacement of weight from a position above the ground (27) to a position in which as a result of sufficient deformability of the wheels (1; 1a, 1b) it simultaneously touches the ground (27) with the front and rear wheels (1a, 1b), and that at least one wheel (1; 1a, 1b) is arranged according to one of the claims 1 to 10.

## Revendications

1. Roue (1, 1a, 1b), notamment pour un appareil de sport pour le ski sur gazon ou analogue, comportant une jante (2) et un pneumatique (3) fixé à la jante (2), ayant une surface de roulement (9) et au moins un élément d'appui (6) élastique pour le pneumatique (3), cet élément s'étendant en forme d'arc entre un premier segment d'appui (5) et un second segment d'appui (5) et il soutient le pneumatique (3) pratiquement dans toute sa section,
**caractérisée en ce que**
le pneumatique (3) se compose de plusieurs couches et présente une couche (10) élastique dans la direction de l'épaisseur, rejoignant la surface de roulement vers l'intérieur de la roue
et plusieurs éléments d'appui (6) sont répartis, écartés les uns des autres dans la direction périphérique.

2. Roue (1 ; 1a, 1b) selon la revendication 1,
**caractérisée en ce que**
le premier et le second segment d'appui (5) sont prévus sur les côtés opposés de la périphérie extérieure de la jante (2).

3. Roue (1 ; 1a, 1b) selon l'une des revendications 1 ou 2,
**caractérisée en ce qu'**
une couche (10) élastique dans le sens de l'épaisseur est réalisée en caoutchouc-mousse et dans la plan médian (2a), son épaisseur (D₂) est au moins cinq fois, et de préférence dix fois, égale à l'épaisseur (D₁) de la surface de roulement (9).

4. Roue (1; 1a, 1b) selon l'une des revendications 1 à 3,
**caractérisée en ce que**
les éléments d'appui (6) sont des fils de ressort en forme de méandres.

5. Roue (1; 1a, 1b) selon l'une des revendications 1 à 4,
**caractérisée par**
des éléments de ressort supplémentaires pour soutenir les éléments d'appui (6).

6. Roue (1; 1a, 1b) selon l'une des revendications 1 à 5,
**caractérisée en ce que**
les éléments d'appui (6) sont fixé à la jante (2) et montés de manière articulée ou coulissant élastiquement.

7. Roue (1 ; 1a, 1b) selon l'une des revendications 1 à 6,
**caractérisée en ce que**
le pneumatique (3) est relié solidairement des deux côtés à la jante (2) et il s'appuie librement sur l'élément d'appui (6).

8. Roue (1; 1a, 1b) selon l'une des revendications 1 à 7,
**caractérisée en ce que**
le pneumatique (3), notamment sans pression, a une structure à trois couches composée d'une surface de roulement (9), d'une couche intérieure élastique souple (10) et d'une couche d'appui (11).

9. Roue (1 ; 1a, 1b) selon l'une des revendications 1 à 8,
**caractérisée en ce qu'**
à côté du pneumatique (3), la jante (2) comporte un élément de prise (13) qui s'étend le long de la périphérie de la jante (2).

10. Roue (1 ; 1a, 1b) selon l'une des revendications 1 à 9,
**caractérisée en ce que**
le diamètre extérieur de la jante (2) correspond sensiblement au demi-diamètre extérieur (D) du pneumatique (3).

11. Appareil de sport, notamment pour le ski sur gazon, comportant un cadre (20) s'étendant dans la direction longitudinale, muni d'au moins deux roues (1 ; 1a, 1b) à pneumatiques (3) déformables élastiquement, montées de manière non suspendue, ayant une fixation (21) pour fixer l'appareil à une chaussure (22) de l'utilisateur, la roue avant (1a) étant située devant la fixation (21) et la roue arrière (1b) derrière la fixation (21) et le cadre (20) comporte derrière la roue arrière (1b), un prolongement (25) pour guider l'appareil, ce prolongement ayant un segment d'appui (26) à son extrémité distale,
**caractérisé en ce que**
le prolongement (25) élastique ou de préférence fixé élastiquement au cadre, peut être mis d'une position au-dessus du sol (27) dans une position dans laquelle, du fait de la déformabilité suffisante des roues (1; 1a, 1b), il touche le sol (27) en même temps que la roue avant et la roue arrière (1a, 1b), par déplacement du poids, et au moins une des roues (1; 1a, 1b) est réalisée selon l'une des revendications 1 à 10.
